# EUROPEAN PATENT APPLICATION

(11) **EP 3 677 389 A1**
(43) Date of publication of application: **08.07.2020**
(21) Application number: 18851845.0
(22) Date of filing: 24.08.2018
(51) Int. Cl.: B25J 9/08

(54) **ROBOT AND METHOD FOR CHECKING EASE OF ASSEMBLY OF ROBOT**

(30) Priority: 31.08.2017 JP 2017167821
(71) Applicant: Kawasaki Jukogyo Kabushiki Kaisha, Kobe-shi, Hyogo 650-8670 (JP)
(72) Inventor: MUNETO, Koji, Kobe-shi, Hyogo 650-8670 (JP); KAMEYAMA, Atsushi, Kobe-shi, Hyogo 650-8670 (JP)
(74) Representative: Witte, Weller & Partner Patentanwälte mbB
(86) International application number: PCT/JP2018/031390
(87) International publication number: WO 2019/044712

(57) **Abstract**

A robot of the present invention includes at least two or more types of component units and a control unit configured to control an operation of each component unit. The respective units are configured to be detachable from each other. The control unit is configured to be able to collect configuration data of each of the component units and acquire connection data regarding connection states of all the component units connected to the control unit based on the collected configuration data. A determination portion that stores a predetermined connection form of each component unit, which is controllable by the control unit, in advance as verification data and determines whether or not connection data acquired by the control unit matches the verification data is further provided.

## Description

### Technical Field

The present invention relates to a robot and a robot assemblability checking method.

### Background Art

In recent years, it has been desired to introduce robots not only for the industrial field but also for the service industry or consumer use. Then, in various fields, the robot can perform work that has been conventionally performed by a person, or the robot can perform work in cooperation with a person. For this reason, robot manufacturers are developing small robots with a payload of 10 kg or less that can be used as substitutes for human arms, and are studying how to sell the small robots. Conventionally, robot transaction has been performed, but robots are generally delivered to customers as assembled finished products. For example, PTL 1 discloses a product ordering system for electronic commerce of a pet-type robot as a product.

In the future, it is expected that there will be a market where components of a robot are sold using the Internet and a user who purchases the parts assembles the robot according to the application.

### Citation List

### Patent Literature

PTL 1: JP 2003-203171 A

### Summary of Invention

### Technical Problem

However, in general, the user often does not have enough knowledge about the robot, and it is complicated to assemble the robot by the user himself or herself.

The present invention has been made to solve the above-described problems, and an object thereof is to improve the assemblability of a robot that can be assembled.

### Solution to Problem

In order to solve the above problems, a robot according to an aspect of the present invention is a robot which includes at least two or more types of component units and a control unit configured to control an operation of each component unit and in which the respective units are configured to be detachable from each other. The component unit is configured to be able to store at least an identification code indicating a type of the component unit itself in advance and transmit configuration data including the identification code to the control unit. The control unit is configured to be able to collect configuration data of each of the component units and acquire connection data regarding connection states of all the component units connected to the control unit based on the collected configuration data. A determination portion that stores a predetermined connection form of cach component unit, which is controllable by the control unit, in advance as verification data and determines whether or not connection data acquired by the control unit matches the verification data is further provided.

According to the configuration described above, the control unit collects configuration data of each component unit, and acquires connection data regarding the connection states of all the component units connected to the control unit based on the collected configuration data. On the other hand, the determination portion determines whether or not the connection states (connection data) of all the component units connected to the control unit match predetermined forms (verification data) of the component units that can be controlled by the control unit. Therefore, the user can determine whether or not its connection configuration is correct by itself by simply connecting the units to each other by the user. Assemblability is improved.

In the robot described above, the control unit and the component units may be daisy-chained with the control unit as a highest-order. The lowest-order component unit may generate configuration data including its own identification code and transmit the generated configuration data to a high-order component unit. Each of the component units may update the configuration data by adding its own identification code to the configuration data and sequentially transmit the updated configuration data to high-order units. The highest-order control unit may be configured to acquire connection data of all the component units based on configuration data transmitted from a low-order component unit.

The component unit may include a high order connection port that communicates with the control unit or a high-order component unit and a low order connection port that communicates with a low-order component unit. When the high order connection port is connected to a high-order unit and the low order connection port is not connected to a low-order component unit, the component unit may set a connection number indicating a connection order of the component unit itself to a lowest number and read its own identification code, generate configuration data including the connection number and the identification code, and transmit the generated configuration data to the control unit or a high-order component unit through the high order connection port. When the high order connection port is connected to a high-order unit and the low order connection port is connected to a low-order component unit, the component unit may be configured to receive the configuration data from a low-order component unit through the low order connection port, set a connection number of the component unit itself based on the received configuration data of the low-order component unit and read its own identification code, add the connection number and the identification code to the configuration data, and transmit the updated configuration data to the control unit or a high-order component unit through the high order connection port.

In addition, in the robot described above, the control unit and the component units may be daisy-chained with the control unit as a highest-order. The highest-order control unit may generate configuration data including its own identification code and transmit the generated configuration data to a low-order component unit. Each of the component units may update the configuration data by adding its own identification code to the configuration data and sequentially transmit the updated configuration data to low-order units. The lowest component unit may acquire connection data of all the component units based on received configuration data and sequentially transmit the acquired connection data to high-order units. The highest-order control unit may be configured to acquire connection data transmitted from a low-order component unit.

The component unit may include a high order connection port that communicates with the control unit or a high-order component unit and a low order connection port that communicates with a low-order component unit. When the high order connection port is connected to a high-order unit and the low order connection port is connected to a lower unit, the component unit may be configured to receive configuration data including a connection number and an identification code of the high-order unit from the high-order unit through the high order connection port, set a connection number of the component unit itself based on the received configuration data of the high-order unit and read its own identification code, add the connection number and the identification code of the component unit itself to the configuration data, transmit updated configuration data to the low-order unit through the low order connection port, and transmit received connection data to the high-order unit through the high order connection port when the connection data is received from the low-order unit through the low order connection port. When the high order connection port is connected to a high-order unit and the low order connection port is not connected to a lower unit, the component unit may be configured to receive configuration data including a connection number and an identification code of the high-order unit from the high-order unit through the high order connection port, set a connection number of the component unit itself based on the received configuration data of the high-order unit and read its own identification code, add the connection number and the identification code of the component unit itself to the configuration data, acquire connection data regarding connection states including connection numbers of all the component units connected to the control unit based on updated configuration data, and transmit the acquired connection data to the high-order unit through the high order connection port.

The determination portion may be mounted on a portable information terminal configured to be communicable with the control unit. According to the configuration described above, since the determination portion is mounted on a portable information terminal (for example, a tablet) configured to be communicable with the control unit, the user can easily perform an operation when checking the assemblability.

The control unit may transmit the acquired connection data to the portable information terminal, and the portable information terminal may be configured to be able to notify a user of a comparison result between the received connection data and the verification data. According to the configuration described above, simply by assembling the robot by the user, the success or failure of the assembly work is notified by a portable information terminal (for example, by tablet screen display or sound).

In addition, the determination portion may be mounted on the control unit, and the control unit may be configured to be able to notify a user of a comparison result between the acquired connection data and the verification data. For example, the user may be notified by display of an indicator (LED) provided in the control unit.

Each of the component units may include one or more joint shafts, each of which has at least a drive motor, and a position detector that detects a rotation angle of the drive motor, and a value of the position detector as a reference position of the component unit may be stored together with the identification code.

According to the configuration described above, each component unit stores the value of the position detector as a reference position of the component unit in the memory together with the identification code. Therefore, for example, even when the component unit fails and is replaced with a new component unit, the control unit collects configuration data including the reference position of the component unit from the new component unit, and this makes recovery easier.

A robot assembly checking method according to another aspect of the present invention is a method for checking assemblability of a robot which includes at least two or more types of component units and a control unit configured to control an operation of each component unit and in which the respective units are configured to be detachable from each other. The robot assembly checking method includes: by the component unit, storing at least an identification code indicating a type of the component unit itself in advance and transmitting configuration data including the identification code to the control unit; by the control unit, collecting configuration data of each of the component units and acquiring connection data regarding connection states of all the component units connected to the control unit based on the collected configuration data; and storing a predetermined connection form of each component unit, which is controllable by the control unit, in advance as verification data and determining whether or not connection data acquired by the control unit matches the verification data by a determination portion.

### Advantageous Effects of Invention

The present invention has the configuration described above, and can improve the assemblability of a robot that can be assembled.

### Brief Description of Drawings

Fig. 1 is a perspective view showing units that can configure a robot according to a first embodiment.
Fig. 2 is a perspective view showing an example of a robot.
Fig. 3 is a block diagram showing the internal configuration of each unit of the robot.
Fig. 4 is a block diagram showing the configuration of each unit on a control board.
Fig. 5 is a schematic diagram for explaining the work for checking the assemblability of a robot.
Fig. 6 is a diagram showing the flow of data between units in a robot assemblability checking process.
Fig. 7 is a flowchart showing an example of the operation of a portable information terminal in the assemblability checking process.
Fig. 8 is a diagram showing the flow of data between units in the assemblability checking process for a robot according to a second embodiment.

### Description of Embodiments

Hereinafter, preferred embodiments will be described with reference to the diagrams. In addition, in the following description, the same or corresponding elements are denoted by the same reference numerals throughout the diagrams, and repeated description thereof will be omitted. In addition, each component is schematically shown to make the diagrams easy to understand.

### (First embodiment)

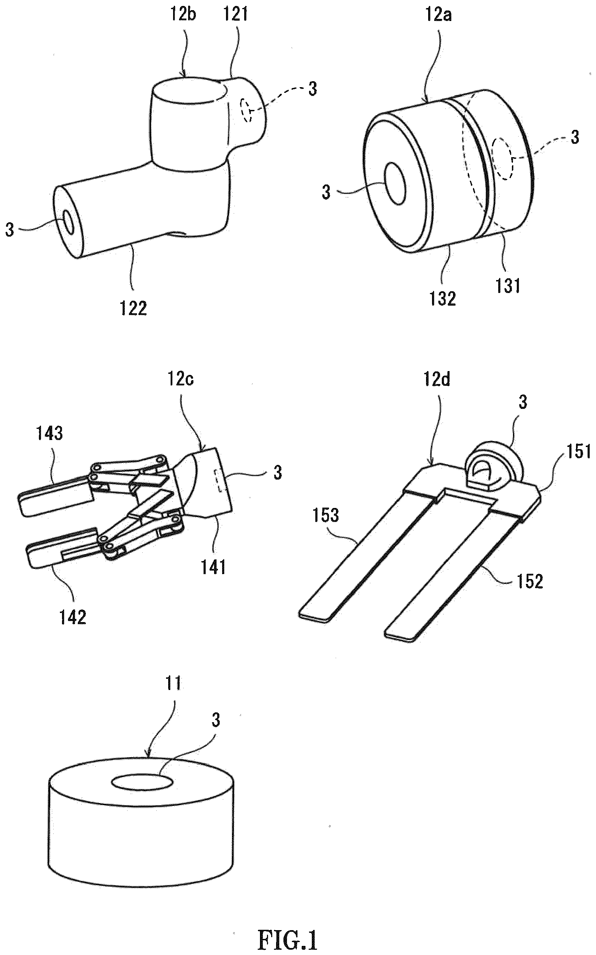

In the present embodiment, a market is assumed in which units that are components of a robot are sold using the Internet and a user who purchases the parts assembles the robot according to the application. Fig. 1 is a perspective view showing respective units that can configure a robot according to a first embodiment of the present invention. The respective units are configured such that a robot can be assembled by being connected to each other by the user. For this reason, each unit has a weight of, for example, several kg or less. As shown in Fig. 1, as the units, there are at least two types of component units 12 and a control unit 11. Hereinafter, the configuration of each unit will be specifically described.

In the present embodiment, four types of units of a rotary unit 12a, a bending unit 12b, a first end effector unit (hereinafter, also simply referred to as a "first end effector") 12c, and a second end effector unit (hereinafter, simply referred to as a "second end effector") 12d are exemplified as the component unit 12. The rotary unit 12a and the bending unit 12b are component units as parts of the arm structure of the robot. The rotary unit 12a includes a first member 131 and a second member 132. The first member 131 and the second member 132 have cylindrical shapes. The cylinders have the same diameter. The length of the cylinder of the first member 131 is defined to be slightly shorter than that of the second member 132. The first member 131 and the second member 132 are connected to each other through a rotary joint (not shown). The rotary joint includes an actuator having a drive motor and a speed reducer connected to the drive motor, a position detector for detecting the rotation angle of the drive motor, and the like (none of which are shown). The rotary axis of the rotary joint is on the same straight line passing through the centers of the cylinders of the first member 131 and the second member 132 (horizontal direction in the figure), and the second member 132 is configured to be rotatable around the rotary axis with respect to the first member 131. In addition, a connector 3 is provided on a surface (circular shape) of the first member 131 opposite to the second member 132 and a surface (circular shape) of the second member 132 opposite to the first member 131, and is configured to be detachable from other units.

The bending unit 12b includes a first arm 121 and a second arm 122. The first arm 121 and the second arm 122 have approximately cylindrical shapes. The length of the cylinder of the first arm 121 is shorter than that of the second arm 122. The first arm 121 and the second arm 122 are connected to each other through a rotary joint (not shown). The rotary joint includes an actuator having a drive motor and a speed reducer connected to the drive motor, a position detector for detecting the rotation angle of the drive motor, and the like (none of which are shown). The second arm 122 is configured to be rotatable around the rotary axis (vertical direction in the diagram) of the rotary joint with respect to the first arm 121. In addition, the connector 3 is provided on an end surface (circular shape) of the first arm 121 opposite to the second arm 122 and an end surface (circular shape) of the second arm 122 opposite to the first arm 121, and is configured to be detachable from other units.

The first end effector 12c is a component unit that functions as an end effector capable of gripping an object. The first end effector 12c includes a base portion 141 and two finger portions 142 and 143 provided on the base portion 141. The connector 3 is provided on the end surface (circular shape) of the base portion 141, and is configured to be detachable from other units. The left and right finger portions 142 and 143 are configured to be able to be opened and closed by an actuator (not shown) built in the base portion 141, and can grip an object.

The second end effector 12d is a component unit that functions as an end effector on which an object can be placed. The second end effector 12d includes a base portion 151 and two finger portions 152 and 153 provided on the base portion 151. The connector 3 is provided on the end surface (circular shape) of the base portion 151, and is configured to be detachable from other units. The two finger portions 152 and 153 function as placement portions. An object can be transported by placing the object on these finger portions. An adsorption member may be provided on the upper surfaces of the finger portions 152 and 153.

The control unit 11 is configured to be able to control the operation of each component unit 12 (the operation of the actuator). The control unit 11 has a cylindrical shape. The connector 3 is provided on the upper surface of the control unit 11, and is configured to be detachable from the other component unit 12. In addition, the shape of the connector 3 for detachably connecting the units (11, 12) to each other is common in order to improve assemblability.

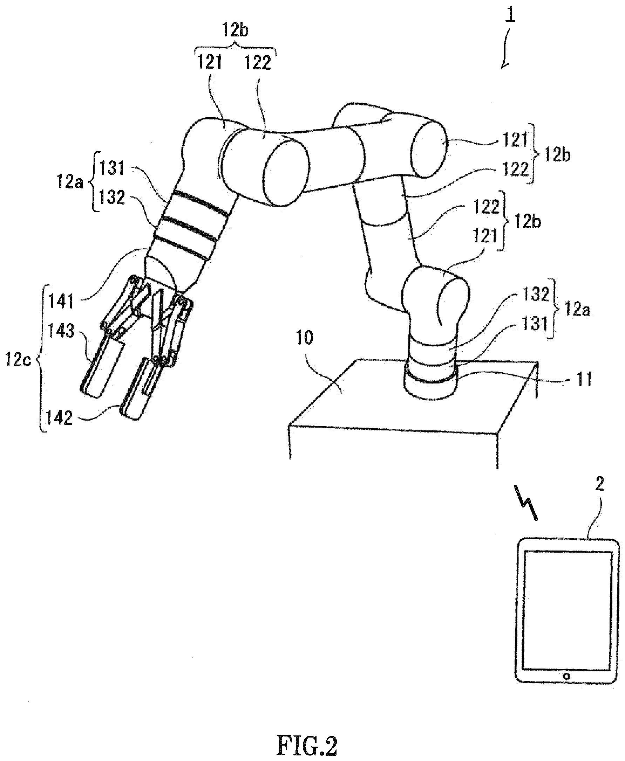

Fig. 2 is a perspective view showing an example of a robot 1. As shown in Fig. 2, the robot 1 is a robot having a vertical articulated arm structure. The robot 1 is assembled using one control unit 11, two rotary units 12a, three bending units 12b, and the first end effector 12c among the units described in Fig. 1. The robot 1 is a small robot having a payload of 10 kg or less that can be used as a substitute for a human arm. The robot 1 is assembled in the order of an installation unit 10, the control unit 11, the first rotary unit 12a, the first bending unit 12b, the second bending unit 12b, the third bending unit 12b, the second rotary unit 12a, and the first end effector 12c.

The control unit 11 is located between the installation unit 10 and the first rotary unit 12a. The control unit 11 is installed on the installation unit 10 by at least one of a magnet, a hook, and a clamp. An attachment position (not shown) provided on the upper surface of the installation unit 10 is a reference position in the coordinate system of the robot 1. The upper surface of the control unit 11 is connected to the first member 131 of the first rotary unit 12a through the connector 3 (refer to Fig. 1).

The first rotary unit 12a is located between the control unit 11 and the first bending unit 12b. The first member 131 of the first rotary unit 12a and the upper surface of the control unit 11 are connected to each other through the connector 3 (refer to Fig. 1). The second member 132 of the first rotary unit 12a and the first arm 121 of the first bending unit 12b are connected to each other through the connector 3 (refer to Fig. 1).

The first bending unit 12b is located between the first rotary unit 12a and the second bending unit 12b. The first arm 121 of the first bending unit 12b and the second member 132 of the first rotary unit 12a are connected to each other through the connector 3 (refer to Fig. 1). The second arm 122 of the first bending unit 12b and the second arm 122 of the second bending unit 12b are connected to each other through the connector 3 (refer to Fig. 1).

The second bending unit 12b is located between the first bending unit 12b and the third bending unit 12b. The second arm 122 of the second bending unit 12b and the second arm 122 of the first bending unit 12b are connected to each other through the connector 3 (refer to Fig. 1). The first arm 121 of the second bending unit 12b and the second arm 122 of the third bending unit 12b are connected to each other through the connector 3 (refer to Fig. 1).

The third bending unit 12b is located between the second bending unit 12b and the second rotary unit 12a. The second arm 122 of the third bending unit 12b and the first arm 121 of the second bending unit 12b are connected to each other through the connector 3 (refer to Fig. 1). The first arm 121 of the third bending unit 12b and the first member 131 of the second rotary unit 12a are connected to each other through the connector 3 (refer to Fig. 1).

The second rotary unit 12a is located between the third bending unit 12b and the first end effector 12c. The first member 131 of the second rotary unit 12a and the first arm 121 of the third bending unit 12b are connected to each other through the connector 3 (refer to Fig. 1). The second member 132 of the second rotary unit 12a and the base portion 141 of the first end effector 12c are connected to each other through the connector 3 (refer to Fig. 1).

In addition, in the present embodiment, the control unit 11 is configured to be able to communicate with a mobile information terminal 2. The mobile information terminal 2 is a tablet, but may be a mobile phone, a PC, or a smartphone as long as this is an information apparatus having a communication function.

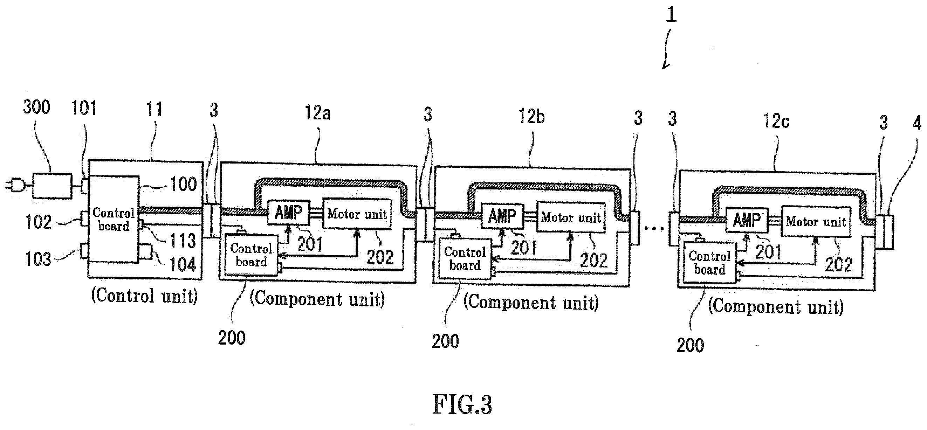

Fig. 3 is a block diagram showing the internal configuration of each unit of the robot 1. As shown in Fig. 3, the control unit 11 is connected in series with the first rotary unit 12a, the first bending unit 12b, the second bending unit 12b, the third bending unit 12b, the second rotary unit 12a, and the first end effector 12c. These component units 12 configure the arm structure of the robot 1. The control unit 11 and the plurality of component units 12 are connected to each other through the connector 3. In addition, the connector 3 on the high order side of the first end effector 12c is connected to the connector 3 of the second rotary unit 12a located at the higher position, and the connector 3 on the low order side of the first end effector 12c is connected to a terminator 4 including a terminating resistor (not shown).

The control unit 11 includes a control board 100 thereinside. The control board 100 includes a power terminal 101, a USB terminal 102, a LAN terminal 103, a wireless communication module 104 for performing wireless communication with the mobile information terminal 2, a connection port 113 for performing communication with the low-order component unit 12, and an integrated circuit (not shown) including a CPU or a memory. The CPU of the control unit 11 communicates with the CPU of each component unit 12 and controls the operation of each component unit 12. Here, an external power unit 300 connected to the power terminal 101 converts a three-phase AC voltage supplied from an AC power supply into a predetermined DC voltage, and supplies a power supply voltage (for example, DC 48 V) to the control unit 11 through the power terminal 101. An internal cable from the control board 100 is connected to the connector 3 of the control unit 11. The internal cable includes a motor power line (thick line) for supplying power from the control board 100 to a motor unit 202 of each component unit 12, a signal line for transmitting a detection signal from a position detector, a communication line for communicating with each component unit 12, and the like.

Each component unit 12 includes a control board 200, a driver unit 201, and a motor unit 202. The control board 200 includes a connection port for communicating with a high-order unit or a low-order unit and an integrated circuit (not shown) including a CPU or a memory. The control board 200 communicates with the CPU of the control unit 11 or the other component unit 12, and controls the driver unit 201. The driver unit 201 includes an amplifier circuit for driving a motor. The motor unit 202 includes a drive motor, a speed reducer connected to the drive motor, a position detector for detecting the rotation angle of the drive motor, and the like. An internal cable is connected to the connector 3 of each component unit 12. The internal cable includes a motor power line (thick line) for supplying power to the motor unit 202 of each component unit 12, a signal line for transmitting a detection signal from a position detector, a communication line for communicating with a high-order unit or a low-order unit, and the like.

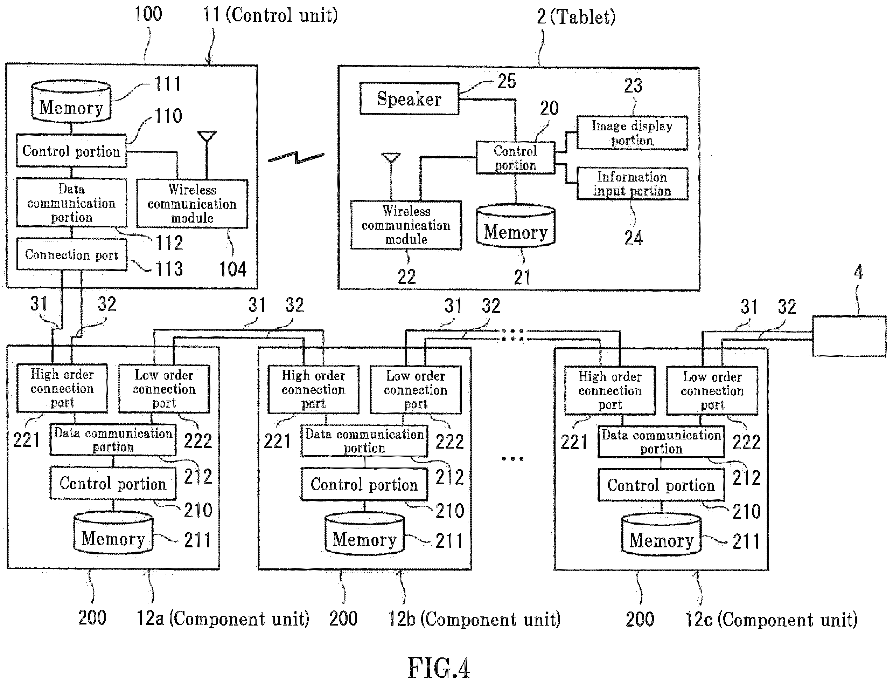

Fig. 4 is a block diagram showing the internal configuration of the control unit 11 (control board 100) and each component unit 12 (control board 200) in Fig. 3. Here, the internal configuration of the mobile information terminal 2 that communicates with the control unit 11 is also shown. As shown in Fig. 4, the control unit 11 and the other component units 12 are daisy-chained with the control unit 11 as the highest order. A low order connection port 222 of the first end effector 12c located at the lowest position is connected to the terminator 4. Here, full-duplex communication using a communication line for transmission 31 and a communication line for reception 32 is used, but half-duplex communication using the same communication line for transmission and reception may be used. In the present embodiment, the respective units (11, 12) are connected to each other by a daisy-chain connection. Accordingly, this is suitable for a communication form between units configuring the arm structure of the robot 1.

The component unit 12 includes a control portion 210, a memory 211, a data communication portion 212 for performing data communication with a high-order unit or a low-order unit, a high order connection port 221 for communicating with the control unit 11 or the high-order component unit 12, and a low order connection port 222 for communicating with the low-order component unit 12. In the memory 211, at least an identification code indicating the type of the component unit is stored in advance. When the component unit 12 is the rotary unit 12a, an identification code R indicating the rotary unit is stored in the memory 211. When the component unit 12 is the bending unit 12b, an identification code B indicating the bending unit is stored in the memory 211. When the component unit 12 is the first end effector 12c, an identification code E indicating the end effector is stored in the memory 211. Each component unit 12 is configured to be able to transmit configuration data including its own identification code to the control unit 11.

The control unit 11 includes a control portion 110, a memory 111, a data communication portion 112, a connection port 113 for communicating with a low-order component unit, and the wireless communication module 104 for communicating with the mobile information terminal 2. In the present embodiment, an identification code C indicating a control unit is stored in the memory 111. The control unit 11 is configured to be able to collect the configuration data of each component unit 12, acquire data regarding the connection states of all the component units 12 connected to the control unit 11 (hereinafter, also simply referred to as "connection data") based on the collected configuration data, and transmit the acquired connection data to the mobile information terminal 2.

The mobile information terminal 2 includes a control portion 20, a memory 21, a wireless communication module 22, a screen display portion 23, an information input portion 24, and a speaker 25. In the present embodiment, the mobile information terminal 2 is a tablet.

The memory 21 stores an operating system (OS) for supporting the operation of an application, an application program executed in the foreground or the background, and the like. The application includes an assemblability checking program for checking the assemblability of the robot 1. For example, this program is downloaded (installed) from a management server or the like operated by the robot manufacturer to the mobile information terminal 2 and executed. The program may be installed in the memory 21 through a storage medium. In the present embodiment, the assemblability checking program is stored in the memory 21 together with data regarding a predetermined connection state of the component unit 12 that can be controlled by the control unit 11 (hereinafter, also simply referred to as "verification data").

The control portion 20 is a calculation device that executes various kinds of processing, and executes a basic program, such as an OS, or various applications. The application includes a program for checking the assemblability of the robot 1. The control portion 20 is configured to receive connection data of all the component units 12 from the control unit 11 through the wireless communication module 22 and determine whether or not the received connection data matches the verification data. In the present embodiment, the control portion 20 corresponds to a "determination portion" of the present invention.

The wireless communication module 22 communicates with the control unit 11 wirelessly. The wireless communication module 22 supports one or more communication methods. Examples of the supported communication method include communication methods of Bluetooth (registered trademark), Ethernet (registered trademark), and mobile phones.

The screen display portion 23 includes a display device, such as a liquid crystal display. The screen display portion 23 displays characters, images, symbols, graphics, and the like on the screen. The information input portion 24 detects an input of information to the screen by the user. The information input portion 24 may detect at least a position where a finger, a pen, a stylus pen, or the like touches or approaches the screen. The detection method of the information input portion 24 may be any method, such as a capacitance method. The screen display portion 23 and the information input portion 24 are realized by a touch screen display. In the present embodiment, the screen display portion 23 is configured to display the comparison result between the connection data and the verification data by the control portion 20 on the screen.

The speaker 25 outputs sound. A tablet type personal computer may further include an output terminal for outputting sound through a headphone (earphone), or may further include a microphone for receiving sound. In the present embodiment, the speaker 25 is configured to provide notification of the comparison result between the connection data and the verification data by the control portion 20 using sound. The mobile information terminal 2 may be configured to be able to notify the user of the comparison result between the connection data and the verification data by the control portion 20 through the screen display portion 23 or the speaker 25.

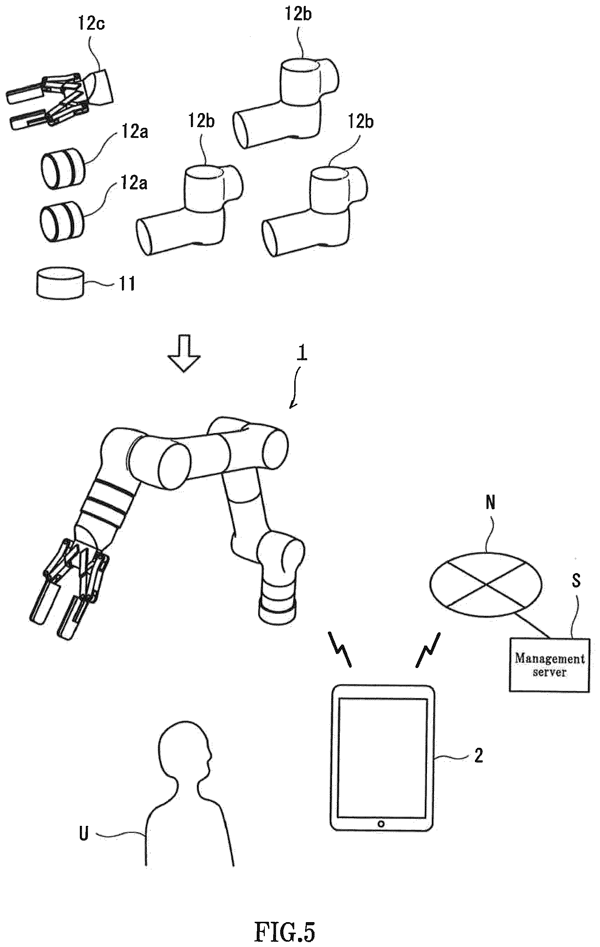

Next, the work for checking the assemblability of the robot 1 will be described. Fig. 5 is a schematic diagram for explaining the work for checking the assemblability of a robot. As shown in Fig. 5, a user U who is considering introduction of a robot communicates with a management server S operated by the robot manufacturer using the mobile information terminal 2, and purchases an assembly kit for the robot 1 through the Internet N. The user U downloads information regarding the robot 1 (for example, electronic data such as a robot instruction manual and verification data for checking assemblability) to the mobile information terminal 2 at the time of purchase. Thereafter, the user U who has received an assembly kit assembles the robot 1 by combining the respective units (11, 12). In addition, since each unit is lightweight (several kg or less), it is easy for the user to handle the unit. In addition, since the shape of the connector 3 for detachably connecting the units to each other is common, the user can easily assemble the robot 1. Then, after the assembly work is completed, the user checks the assemblability of the robot 1.

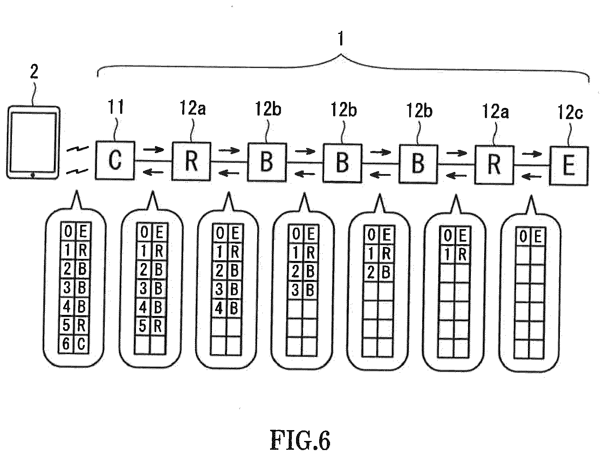

Next, a process for checking the assemblability of the robot 1 will be described. First, the user operates the mobile information terminal 2 to transmit an instruction to start an assemblability checking process to the control unit 11. The control unit 11 starts the assemblability checking process. Fig. 6 is a diagram illustrating the flow of data between units in the process for checking the assemblability of the robot 1. As shown in Fig. 6, in the present embodiment, the control unit 11 transmits a request message for performing the assemblability checking process to all the low-order component units 12. This is a trigger to start processing in each component unit 12. In the present embodiment, the lowest-order component unit 12 generates configuration data including its own identification code, and transmits the generated configuration data to the high-order component unit 12. Each component unit 12 updates the configuration data by adding its own identification code to the configuration data and sequentially transmits the updated configuration data to high-order units. The highest-order control unit 11 acquires connection data of all the component units 12 based on the configuration data transmitted from the low-order component unit 12. Hereinafter, specific processing of each unit will be described.

First, in the end effector 12c that is the lowest-order component unit 12, the high order connection port 221 is connected to the high-order component unit 12, and the low order connection port 222 is not connected to the low-order component unit 12 (refer to Fig. 4). When a request message is received, a connection number indicating the connection order of its own component unit is set to the lowest number and its own identification code is read, and configuration data including the connection number and the identification code is generated. As shown in Fig. 6, the end effector 12c is connected to the high-order second rotary unit 12a, and is the lowest-order component unit 12. Therefore, the connection number of its own component unit 12 is set to 0 and its own identification code E is read from the memory 211 to generate its own configuration data. Then, the end effector 12c transmits the generated configuration data to the second rotary unit 12a, which is the high-order component unit 12, through the high order connection port 221. The generated configuration data includes the connection number (0) and the identification code (E) corresponding thereto.

Then, in the second rotary unit 12a, the high order connection port 221 is connected to the high-order component unit 12, and the low order connection port 222 is connected to the low-order component unit 12. When a request message is received, reception of configuration data from the low-order component unit 12 through the low order connection port 222 is awaited. When the configuration data is received, the connection number of its own component unit is set based on the received configuration data of the low-order component unit 12 and its own identification code is read, and the connection number and the identification code are added to the configuration data. As shown in Fig. 6, the second rotary unit 12a receives configuration data including the connection number (0) and the identification code (E) corresponding thereto from the low-order end effector 12c, sets the connection number of its own component unit to 1 and reads the identification code R from the memory 211, and adds the connection number and the identification code to the received configuration data. The second rotary unit 12a transmits the updated configuration data to the third bending unit 12b, which is the high-order component unit 12, through the high order connection port 221. The updated configuration data includes the connection numbers (0, 1) and the identification codes (E, R) corresponding thereto.

Then, in the third bending unit 12b, the high order connection port 221 is connected to the high-order component unit 12, and the low order connection port 222 is connected to the low-order component unit 12. When a request message is received, reception of configuration data from the low-order component unit 12 through the low order connection port 222 is awaited. When the configuration data is received, the connection number of its own component unit is set based on the received configuration data of the low-order component unit 12 and its own identification code is read, and the connection number and the identification code are added to the configuration data. As shown in Fig. 6, the third bending unit 12b receives configuration data including the connection numbers (0, 1) and the identification codes (E, R) corresponding thereto from the low-order second rotary unit 12a, sets the connection number of its own component unit to 2 and reads the identification code B from the memory 211, and adds the connection number and the identification code to the received configuration data. The third bending unit 12b transmits the updated configuration data to the second bending unit 12b, which is the high-order component unit 12, through the high order connection port 221. The updated configuration data includes the connection numbers (0, 1, 2) and the identification codes (E, R, B) corresponding thereto.

Then, in the second bending unit 12b, the high order connection port 221 is connected to the high-order component unit 12, and the low order connection port 222 is connected to the low-order component unit 12. When a request message is received, reception of configuration data from the low-order component unit 12 through the low order connection port 222 is awaited. When the configuration data is received, the connection number of its own component unit is set based on the received configuration data of the low-order component unit 12 and its own identification code is read, and the connection number and the identification code are added to the configuration data. As shown in Fig. 6, the second bending unit 12b receives configuration data including the connection numbers (0, 1, 2) and the identification codes (E, R, B) corresponding thereto from the low-order third bending unit 12b, sets the connection number of its own component unit to 3 and reads the identification code B from the memory 211, and adds the connection number and the identification code to the received configuration data. The second bending unit 12b transmits the updated configuration data to the first bending unit 12b, which is the high-order component unit 12, through the high order connection port 221. The updated configuration data includes the connection numbers (0, 1, 2, 3) and the identification codes (E, R, B, B) corresponding thereto.

Then, in the first bending unit 12b, the high order connection port 221 is connected to the high-order component unit 12, and the low order connection port 222 is connected to the low-order component unit 12 (refer to Fig. 4). When a request message is received, reception of configuration data from the low-order component unit 12 through the low order connection port 222 is awaited. When the configuration data is received, the connection number of its own component unit is set based on the received configuration data of the low-order component unit 12 and its own identification code is read, and the connection number and the identification code are added to the configuration data. As shown in Fig. 6, the first bending unit 12b receives configuration data including the connection numbers (0, 1, 2, 3) and the identification codes (E, R, B, B) corresponding thereto from the low-order second bending unit 12b, sets the connection number of its own component unit to 4 and reads the identification code B from the memory 211, and adds the connection number and the identification code to the received configuration data. The first bending unit 12b transmits the updated configuration data to the first rotary unit 12a, which is the high-order component unit 12, through the high order connection port 221. The updated configuration data includes the connection numbers (0, 1, 2, 3, 4) and the identification codes (E, R, B, B, B) corresponding thereto.

Then, in the first rotary unit 12a, the high order connection port 221 is connected to the high-order component unit 12, and the low order connection port 222 is connected to the low-order component unit 12 (refer to Fig. 4). When a request message is received, reception of configuration data from the low-order component unit 12 through the low order connection port 222 is awaited. When the configuration data is received, the connection number of its own component unit is set based on the received configuration data of the low-order component unit 12 and its own identification code is read, and the connection number and the identification code are added to the configuration data. As shown in Fig. 6, the first rotary unit 12a receives configuration data including the connection numbers (0, 1, 2, 3, 4) and the identification codes (E, R, B, B, B) corresponding thereto from the low-order first bending unit 12b, sets the connection number of its own component unit to 5 and reads the identification code R from the memory 211, and adds the connection number and the identification code to the received configuration data. The first rotary unit 12a transmits the updated configuration data to the high-order control unit 11 through the high order connection port 221. The updated configuration data includes the connection numbers (0, 1, 2, 3, 4, 5) and the identification codes (E, R, B, B, B, R) corresponding thereto.

In addition, the component unit 12 may be configured to notify the user of an error message when other units are connected only to the low order connection port 222 or when other units are connected neither to the high order connection port 221 nor to the low order connection port 222.

Then, in the control unit 11, the connection port 113 is connected to the low-order component unit 12 (refer to Fig. 4). After transmission of the request message, reception of configuration data from the low-order component unit 12 (first rotary unit 12a) through the connection port 113 is awaited. When the configuration data is received, connection data regarding the connection state including the connection numbers of all the component units 12 connected to the control unit 11 is acquired based on the received configuration data. As shown in Fig. 6, the control unit 11 receives configuration data including the connection numbers (0, 1, 2, 3, 4, 5) and the identification codes (E, R, B, B, B, R) corresponding thereto from the low-order first rotary unit 12a, sets the connection number of its own component unit to 6 and reads the identification code C from the memory 111, and adds the connection numher and the identification code to the received configuration data to acquire connection data. The control unit 11 transmits the acquired connection data to the mobile information terminal 2 through the wireless communication module 104. The acquired connection data includes the connection numbers (0, 1, 2, 3, 4, 5, 6) and the identification codes (E, R, B, B, B, R, C) corresponding thereto.

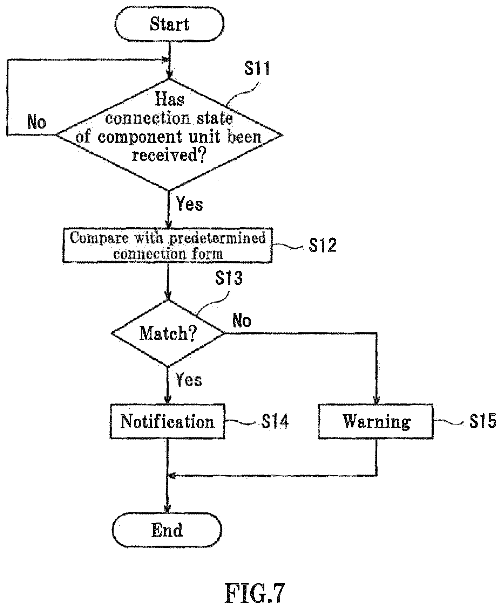

Fig. 7 is a flowchart showing an example of the operation of the mobile information terminal 2 in the assemblability checking process. In the memory 111 of the mobile information terminal 2, the connection numbers (0, 1, 2, 3, 4, 5, 6) and the identification codes (E, R, B, B, B, R, C) corresponding thereto are stored in advance as verification data. As shown in Fig. 7, after the assemblability checking process is started, the mobile information terminal 2 waits until connection data is received from the control unit 11 (step S11). When the connection data is received from the control unit 11, the mobile information terminal 2 reads verification data from the memory 111 and compares the received connection data with the verification data (step S12). As shown in Fig. 6, the connection data received by the mobile information terminal 2 is data regarding the connection states of all the component units 12 connected to the control unit 11. Here, the connection numbers (0, 1, 2, 3, 4, 5, 6) and the identification codes (E, R, B, B, B, R, C) corresponding thereto are included. Then, it is determined whether or not the connection states (connection data) of all the component units 12 connected to the control unit 11 match a predetermined connection mode (verification data) of the component unit 12 connectable to the control unit 11 (step S13). The mobile information terminal 2 notifies the user of the comparison result through the screen display portion 23 and the speaker 25. Specifically, if both the pieces of data match each other (YES in step S13), notification of the fact is provided to the user (step S14). In this case, a communication path is established between the control unit 11 and each component unit 12, so that the operation of each component unit 12 can be controlled by the control unit 11. On the other hand, if both the pieces of data do not match each other (YES in step S13), a warning is given to the user (step S15). The user redoes the assembly work.

In the robot 1 of the present embodiment, the robot 1 can determine whether or not its connection configuration is correct by itself by simply connecting the units 11 and 12 to each other by the user. In addition, since the mobile information terminal 2 notifies the user of the determination result, it is possible to improve the assemblability.

In addition, in the present embodiment, the assemblability checking process is started in each component unit 12 by transmitting a request message from the control unit 11 to the low-order component unit 12. However, the assemblability checking process may be started after the user assembles the robot 1 and then turns on the power of each of the units 11 and 12.

### (Second embodiment)

Next, a second embodiment will be described. The configuration of the robot 1 of the present embodiment is the same as that of the first embodiment. Hereinafter, the description of the configuration common to the first embodiment will be omitted, and only the different configuration will be described.

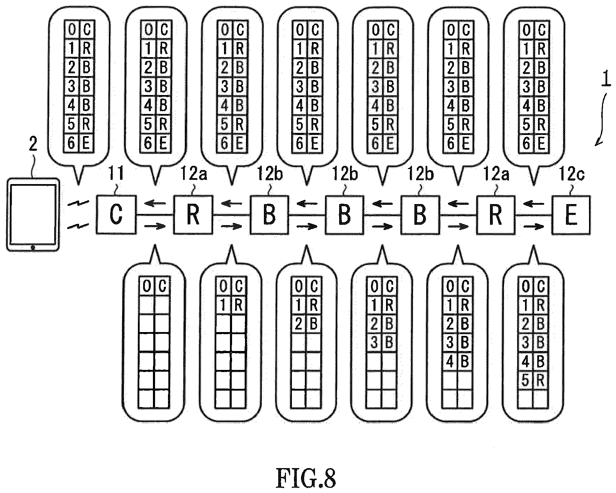

Fig. 8 is a diagram showing a flow of configuration data between units at the time of assemblability checking of the robot 1 according to the present embodiment. As shown in Fig. 8, the control unit 11 starts an assemblability checking process in response to an instruction to start the assemblability checking process from the mobile information terminal 2. In the present embodiment, the highest-order control unit 11 generates configuration data including its own identification code, and transmits the generated configuration data to the low-order component unit 12. Each component unit 12 updates the configuration data by adding its own identification code to the configuration data and sequentially transmits the updated configuration data to the low-order component unit 12. The lowest-order component unit 12 acquires connection data of all the component units 12 based on the received configuration data and sequentially transmits the acquired connection data to the high-order unit, and the highest-order control unit 11 acquires the connection data transmitted from the low-order component unit 12. Hereinafter, specific processing of each unit will be described.

First, in the highest-order control unit 11, the connection port 113 is connected to the low-order component unit 12 (refer to Fig. 4). In this case, a connection number indicating the connection order of its own unit is set to the lowest number and its own identification code is read, and configuration data including the connection number and the identification code is generated. As shown in Fig. 8, the connection number of its own unit is set to 0, its own identification code C is read from the memory 111, and its own configuration data is generated. Then, the control unit 11 transmits the generated configuration data to the first rotary unit 12a, which is the low-order component unit 12, through the connection port 113. The generated configuration data includes the connection number (0) and the identification code (C) corresponding thereto.

Then, in the first rotary unit 12a, the high order connection port 221 is connected to the high-order control unit 11, and the low order connection port 222 is connected to the low-order component unit 12 (refer to Fig. 4). In this case, reception of configuration data, which includes the connection number and the identification code of the high-order unit, from the high-order control unit 11 through the high order connection port 221 is awaited. When the configuration data is received, the connection number of its own unit is set based on the configuration data of the high-order control unit 11 and its own identification code is read, and the connection number and the identification code are added to the configuration data. As shown in Fig. 8, the first rotary unit 12a receives the configuration data including the connection number (0) and the identification code (C) of the high-order control unit 11 from the high-order control unit 11, sets the connection number of its own unit to 1 based on the received configuration data of the high-order control unit 11 and reads its own identification code R, and adds the connection number and the identification code to the configuration data. The first rotary unit 12a transmits the updated configuration data to the first bending unit 12b, which is the low-order component unit 12, through the low order connection port 222. The updated configuration data includes the connection numbers (0,1) and the identification codes (C, R) corresponding thereto.

Then, in the first bending unit 12b, the high order connection port 221 is connected to the high-order control unit 11, and the low order connection port 222 is connected to the low-order component unit 12 (refer to Fig. 4). In this case, reception of configuration data, which includes the connection number and the identification code of the high-order unit, from the high-order first rotary unit 12a through the high order connection port 221 is awaited. When the configuration data is received, the connection number of its own unit is set based on the received configuration data of the high-order unit and its own identification code is read, and the connection number and the identification code are added to the configuration data. As shown in Fig. 8, the first bending unit 12b receives the configuration data including the connection numbers (0, 1) and the identification codes (C, R) of the high-order unit from the high-order first rotary unit 12a, sets the connection number of its own unit to 2 based on the received configuration data of the high-order unit and reads its own identification code B, and adds the connection number and the identification code to the configuration data. The first bending unit 12b transmits the updated configuration data to the second bending unit 12b, which is the low-order component unit 12, through the low order connection port 222. The updated configuration data includes the connection numbers (0,1,2) and the identification codes (C, R, B) corresponding thereto.

Then, in the second bending unit 12b, the high order connection port 221 is connected to the high-order control unit 11, and the low order connection port 222 is connected to the low-order component unit 12. In this case, reception of configuration data, which includes the connection number and the identification code of the high-order unit, from the high-order first bending unit 12b through the high order connection port 221 is awaited. When the configuration data is received, the connection number of its own unit is set based on the received configuration data of the high-order unit and its own identification code is read, and the connection number and the identification code are added to the configuration data. As shown in Fig. 8, the second bending unit 12b receives the configuration data including the connection numbers (0, 1, 2) and the identification codes (C, R, B) of the high-order unit from the high-order first bending unit 12b, sets the connection number of its own unit to 3 based on the received configuration data of the high-order unit and reads its own identification code B, and adds the connection number and the identification code to the configuration data. The second bending unit 12b transmits the updated configuration data to the third bending unit 12b, which is the low-order component unit 12, through the low order connection port 222. The updated configuration data includes the connection numbers (0, 1, 2, 3) and the identification codes (C, R, B, B) corresponding thereto.

Then, in the third bending unit 12b, the high order connection port 221 is connected to the high-order control unit 11, and the low order connection port 222 is connected to the low-order component unit 12. In this case, reception of configuration data, which includes the connection number and the identification code of the high-order unit, from the high-order second bending unit 12b through the high order connection port 221 is awaited. When the configuration data is received, the connection number of its own unit is set based on the received configuration data of the high-order unit and its own identification code is read, and the connection number and the identification code are added to the configuration data. As shown in Fig. 8, the third bending unit 12b receives the configuration data including the connection numbers (0, 1, 2, 3) and the identification codes (C, R, B, B) of the high-order unit from the high-order second bending unit 12b, sets the connection number of its own unit to 4 based on the received configuration data of the high-order unit and reads its own identification code B, and adds the connection number and the identification code to the configuration data. The third bending unit 12b transmits the updated configuration data to the second rotary unit 12a, which is the low-order component unit 12, through the low order connection port 222. The updated configuration data includes the connection numbers (0, 1, 2, 3, 4) and the identification codes (C, R, B, B, B) corresponding thereto.

Then, in the second rotary unit 12a, the high order connection port 221 is connected to the high-order control unit 11, and the low order connection port 222 is connected to the low-order component unit 12. In this case, reception of configuration data, which includes the connection number and the identification code of the high-order unit, from the high-order third bending unit 12b through the high order connection port 221 is awaited. When the configuration data is received, the connection number of its own unit is set based on the received configuration data of the high-order unit and its own identification code is read, and the connection number and the identification code are added to the configuration data. As shown in Fig. 8, the third bending unit 12b receives the configuration data including the connection numbers (0, 1, 2, 3, 4) and the identification codes (C, R, B, B, B) of the high-order unit from the high-order second bending unit 12b, sets the connection number of its own unit to 5 based on the received configuration data of the high-order unit and reads its own identification code R, and adds the connection number and the identification code to the configuration data. The second rotary unit 12a transmits the updated configuration data to the end effector 12c, which is the low-order component unit 12, through the low order connection port 222. The updated configuration data includes the connection numbers (0, 1, 2, 3, 4, 5) and the identification codes (C, R, B, B, B, R) corresponding thereto.

Then, in the end effector 12c, the high order connection port 221 is connected to the high-order control unit 11, and the low order connection port 222 is not connected to the low-order component unit 12 (refer to Fig. 4). In this case, reception of configuration data, which includes the connection number and the identification code of the high-order unit, from the high-order second rotary unit 12a through the high order connection port 221 is awaited. When the configuration data is received, the connection number of its own unit is set based on the received configuration data of the high-order unit and its own identification code is read, and the connection number and the identification code are added to the configuration data. As shown in Fig. 8, the end effector 12c receives the configuration data including the connection numbers (0, 1, 2, 3, 4, 5) and the identification codes (C, R, B, B, B, R) of the high-order unit from the high-order second rotary unit 12a, sets the connection number of its own unit to 6 based on the received configuration data of the high-order unit and reads its own identification code E, and adds the connection number and the identification code to the configuration data. The end effector 12c acquires connection data regarding the connection state including the connection numbers of all the component units 12 connected to the control unit 11 based on the updated configuration data, and transmits the acquired connection data to the second rotary unit 12a, which is the high-order component unit 12, through the high order connection port 221. The acquired connection data includes the connection numbers (0, 1, 2, 3, 4, 5, 6) and the identification codes (C, R, B, B, B, R, E) corresponding thereto.

Then, as shown in Fig. 8, the second rotary unit 12a receives the connection data from the low-order end effector 12c, and transmits the received connection data to the high-order third bending unit 12b. Then, the third bending unit 12b receives the connection data from the low-order second rotary unit 12a, and transmits the received connection data to the high-order second bending unit 12b. Then, the second bending unit 12b receives the connection data from the low-order third bending unit 12b, and transmits the received connection data to the high-order first bending unit 12b. Then, the first bending unit 12b receives the connection data from the low-order second bending unit 12b, and transmits the received connection data to the high-order first rotary unit 12a. Then, the first rotary unit 12a receives the connection data from the lower first bending unit 12b, and transmits the received connection data to the high-order control unit 11. That is, each component unit 12 is configured to transmit the received connection data to the high-order unit through the high order connection port 221 when the connection data is received from the low-order unit through the low order connection port 222.

In this manner, the highest-order control unit 11 acquires the connection data transmitted from the low-order component unit 12 through the connection port 113, and transmits the connection data to the mobile information terminal 2. Then, the mobile information terminal 2 compares the connection data with verification data and notify the user of the determination result. Therefore, also in the present embodiment, it is possible to improve the assemblability as in the first embodiment.

### (Other embodiments)

In addition, in each of the above embodiments, each component unit 12 stores an identification code indicating the type of its own unit in the memory 211. However, the value of the position detector as a reference position of the component unit may be stored together with the identification code. Therefore, for example, even when the component unit 12 fails and is replaced with a new component unit 12, the control unit 11 collects configuration data including the reference position of the component unit from the new component unit 12, and this makes recovery easier.

In addition, in each of the above embodiments, the mobile information terminal 2 is configured to notify the user of the comparison result between the received connection data and the verification data by screen display or sound. However, the present invention is not limited thereto. The control unit 11 may be configured to notify the user of the comparison result between the acquired connection data and the verification data using, for example, an indicator (LED).

Although the robot 1 of the present embodiment is assembled as a robot having a vertical articulated arm structure (refer to Fig. 2), the present invention is not limited thereto. For example, a robot having a horizontal articulated arm structure may be assembled using the second end effector 12d and the bending unit 12b.

In the present embodiment, the identification code indicating the type of unit is an alphabet. However, instead of the alphabet, numbers or other character codes or a combination of numbers and a character code may be used as the identification code.

In addition, although a daisy chain is used in the present embodiment, all the component units may be connected to the control unit 11.

From the above description, many modifications or other embodiments of the present invention are obvious to those skilled in the art. Therefore, the above description is to be construed as illustrative only and is provided for the purpose of teaching the best mode of carrying out the present invention to those skilled in the art. The details of the structures and/or functions can be substantially changed without departing from the spirit of the present invention.

### Industrial Applicability

The present invention is useful for a robot that can be assembled.

### Reference Signs List

- 1: robot
- 2: mobile information terminal (determination portion)
- 3: connector
- 4: terminator
- 10: installation unit
- 11: control unit
- 12: component unit
- 12a: rotary unit
- 12b: bending unit
- 12c, 12d: end effector unit
- 31: communication line (for transmission)
- 32: communication line (for reception)
- 100: control board
- 101: power terminal
- 102: USB port
- 103: LAN port
- 104: wireless communication module
- 110: control portion
- 111: memory
- 112: data communication portion
- 113: unit connection port
- 200: control board
- 201: driver unit
- 202: motor unit
- 210: control portion
- 211: memory
- 212: data communication portion
- 221: high order connection port
- 222: low order connection port
- 300: power unit
- R1: terminating resistor
- N: network
- S: management server

## Claims

1. A robot, comprising:
at least two or more types of component units; and
a control unit configured to control an operation of each component unit, wherein
the respective units are configured to be detachable from each other,
the component unit is configured to be able to store at least an identification code indicating a type of the component unit itself in advance and transmit configuration data including the identification code to the control unit,
the control unit is configured to be able to collect configuration data of each of the component units and acquire connection data regarding connection states of all the component units connected to the control unit based on the collected configuration data, and
a determination portion that stores a predetermined connection form of each component unit, which is controllable by the control unit, in advance as verification data and determines whether or not connection data acquired by the control unit matches the verification data is further provided.

2. The robot according to claim 1, wherein
the control unit and the component units are daisy-chained with the control unit as a highest-order,
the lowest-order component unit generates configuration data including its own identification code and transmits the generated configuration data to a high-order component unit,
each of the component units updates the configuration data by adding its own identification code to the configuration data and sequentially transmits the updated configuration data to high-order units, and
the highest-order control unit is configured to acquire connection data of all the component units based on configuration data transmitted from a low-order component unit.

3. The robot according to claim 2, wherein
the component unit includes a high order connection port that communicates with the control unit or a high-order component unit and a low order connection port that communicates with a low-order component unit,
when the high order connection port is connected to a high-order unit and the low order connection port is not connected to a low-order component unit, the component unit sets a connection number indicating a connection order of the component unit itself to a lowest number and reads its own identification code, generates configuration data including the connection number and the identification code, and transmits the generated configuration data to the control unit or a high-order component unit through the high order connection port, and
when the high order connection port is connected to a high-order unit and the low order connection port is connected to a low-order component unit, the component unit is configured to receive the configuration data from a low-order component unit through the low order connection port, set a connection number of the component unit itself based on the received configuration data of the low-order component unit and read its own identification code, add the connection number and the identification code to the configuration data, and transmit the updated configuration data to the control unit or a high-order component unit through the high order connection port.

4. The robot according to claim 1, wherein
the control unit and the component units are daisy-chained with the control unit as a highest-order,
the highest-order control unit generates configuration data including its own identification code and transmits the generated configuration data to a low-order component unit,
each of the component units updates the configuration data by adding its own identification code to the configuration data and sequentially transmits the updated configuration data to low-order units,
the lowest component unit acquires connection data of all the component units based on received configuration data and sequentially transmits the acquired connection data to high-order units, and
the highest-order control unit is configured to acquire connection data transmitted from a low-order component unit.

5. The robot according to claim 4, wherein
the component unit includes a high order connection port that communicates with the control unit or a high-order component unit and a low order connection port that communicates with a low-order component unit,
when the high order connection port is connected to a high-order unit and the low order connection port is connected to a lower unit, the component unit is configured to receive configuration data including a connection number and an identification code of the high-order unit from the high-order unit through the high order connection port, set a connection number of the component unit itself based on the received configuration data of the high-order unit and read its own identification code, add the connection number and the identification code of the component unit itself to the configuration data, transmit updated configuration data to the low-order unit through the low order connection port, and transmit received connection data to the high-order unit through the high order connection port when the connection data is received from the low-order unit through the low order connection port, and
when the high order connection port is connected to a high-order unit and the low order connection port is not connected to a lower unit, the component unit is configured to receive configuration data including a connection number and an identification code of the high-order unit from the high-order unit through the high order connection port, set a connection number of the component unit itself based on the received configuration data of the high-order unit and read its own identification code, add the connection number and the identification code of the component unit itself to the configuration data, acquire connection data regarding connection states including connection numbers of all the component units connected to the control unit based on updated configuration data, and transmit the acquired connection data to the high-order unit through the high order connection port.

6. The robot according to any one of claims 1 to 5, wherein the determination portion is mounted on a portable information terminal configured to be communicable with the control unit.

7. The robot according to claim 6, wherein
the control unit transmits the acquired connection data to the portable information terminal, and
the portable information terminal is configured to be able to notify a user of a comparison result between the received connection data and the verification data.

8. The robot according to any one of claims 1 to 5, wherein
the determination portion is mounted on the control unit, and
the control unit is configured to be able to notify a user of a comparison result between the acquired connection data and the verification data.

9. The robot according to any one of claims 1 to 5, wherein
each of the component units includes one or more joint shafts, each of which has at least a drive motor, and a position detector that detects a rotation angle of the drive motor, and
a value of the position detector as a reference position of the component unit is stored together with the identification code.

10. A method for checking assemblability of a robot, which includes at least two or more types of component units and a control unit configured to control an operation of each component unit and in which the respective units are configured to be detachable from each other, the method comprising:
by the component unit, storing at least an identification code indicating a type of the component unit itself in advance and transmitting configuration data including the identification code to the control unit;
by the control unit, collecting configuration data of each of the component units and acquiring connection data regarding connection states of all the component units connected to the control unit based on the collected configuration data; and
storing a predetermined connection form of each component unit, which is controllable by the control unit, in advance as verification data and determining whether or not connection data acquired by the control unit matches the verification data by a determination portion.
